# EUROPEAN PATENT APPLICATION

(11) **EP 1 995 975 A2**
(43) Date of publication of application: **26.11.2008**
(21) Application number: 08009508.6
(22) Date of filing: 23.05.2008
(51) Int. Cl.: H04N 9/31

(54) **Illumination apparatus and projection image display apparatus**

(30) Priority: 24.05.2007 JP 2007137555
(71) Applicant: Sanyo Electric Co., Ltd., Moriguchi-shi, Osaka (JP)
(72) Inventor: Maeda, Makoto, Osaka 536-0017 (JP); Inoue, Masutaka, Osaka 573-0093 (JP)
(74) Representative: Glawe, Delfs, Moll

(57) **Abstract**

An illuminating apparatus comprises a light source and an optical system for guiding the light from the light source to an imager such as a liquid crystal panel. The optical system has an optical element disposed for changing a traveling direction of the light traveling to the imager in accordance with a control signal. The optical element is controlled such that, out of all pixel regions on the imager, part of the light amount to be applied to low-brightness pixel regions is distributed to high-brightness pixel regions.

## Description

*This application claims priority under 35 U.S.C. Section 119 of Japanese Patent Application No.* 2007-137555 filed May 24, 2007*, entitled "ILLUMINATING APPARATUS AND PROJECTION IMAGE DISPLAY APPARATUS".*

### BACKGROUND OF THE INVENTION

### 1. Field of the invention

The present invention relates to an illuminating apparatus for applying light to an illumination area and a projection image display apparatus for modulating the light from the illuminating apparatus by an imager and projecting the light onto a screen or the like.

### 2. Description of the related art

At present, there are commercialized and widely used projection image display apparatuses that project an image onto a screen or the like (hereinafter, referred to as "projectors"). Of them, in general, a type of projector that modulates light by an imager such as a liquid crystal panel evenly applies the light from a light source to an irradiation surface of the imager.

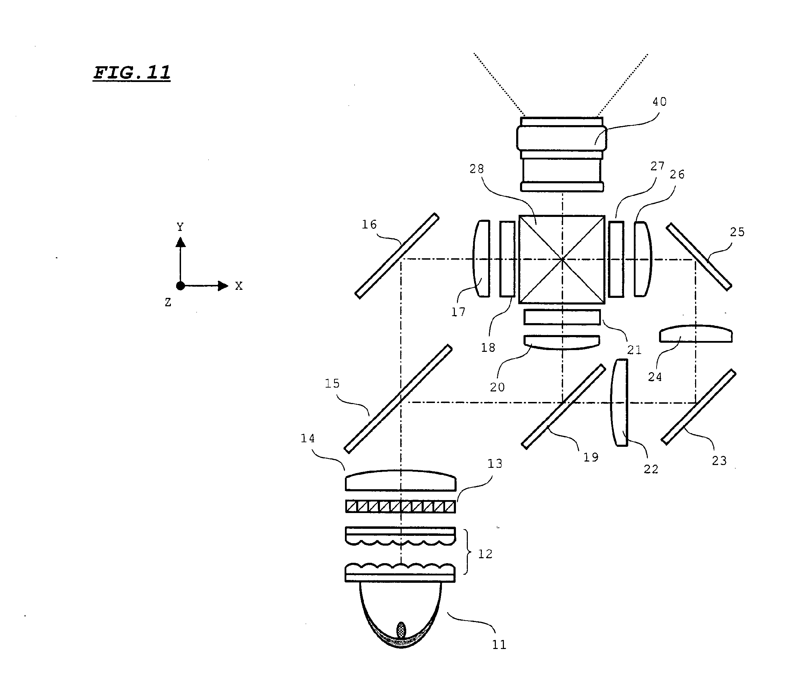

FIG. 11 shows a configuration example of a three-plate LCD projector. Light from a light source 11 (white light) is adjusted by a fly-eye integrator 12 such that a uniform amount of light is distributed when the light enters liquid crystal panels 18, 21 and 27. Further, the light is aligned in one polarization direction by a PBS (polarized beam splitter) array 13, and condensed by a condenser lens 14. The liquid crystal panels 18, 21 and 27 respectively have polarizers disposed on an incident side and an output side.

The light passing through the condenser lens 14 is separated by dichroic mirrors 15 and 19 into red-wavelength band light (hereinafter, referred to as "R light"), blue-wavelength band light (hereinafter, referred to as "B light") and green-wavelength band light (hereinafter, referred to as "G light").

Of the lights, the R light is evenly applied to an illumination region of the liquid crystal panel 18 through a mirror 16 and a lens 17. The G light is reflected by a dichroic mirror 19, and through a lens 20, evenly applied to an illumination region of the liquid crystal panel 21. The B light passes through the dichroic mirror 19, is entered into a lens 26 through a relay optical system formed of mirrors 23 and 25 and lenses 22 and 24, and then, evenly applied to an illumination region of the liquid crystal panel 27.

The R, G and B lights modulated by the liquid crystal panels 18, 21 and 27 are combined by a dichroic prism 28, and the combined light is projected by a projection lens 40 onto a screen surface.

Recently, high-quality picture technologies in projectors have been attracting attention as penetration of home theater systems and occasions of making a presentation with use of a projector have increased. For example, high image quality can be achieved by the following technique: an amount of light (illumination light) applied to an imager is adjusted by use of a functional shutter, whereby gradation of the illumination light is increased and displayable brightness range (dynamic range) is extended; or the light from the light source is adjusted by use of an iris to improve a contrast of an image.

In the conventional projectors, an optical system is designed such that illumination light is evenly applied to a whole surface of an imager. For a region of an imager from which a small amount of modulated light is outputted (for example, a region in which a black image is displayed), the illumination light is cut by a polarizer which is a part of the imager. Thus, there dynamically arises a region in the imager where the illumination light cannot be effectively used. It is desired that such a region be irradiated with a low amount of light. Irradiation of this region with an excessive amount of light would lead to a decreased contrast.

### SUMMARY OF THE INVENTION

The present invention is intended to improve a contrast and increases light use efficiency by adjusting light amount distribution of light applied to an imager in accordance with a video signal.

A first aspect of the present invention relates to an illuminating apparatus for applying light to an imager that modulates the light in accordance with a video signal. An illuminating apparatus according to this aspect comprises: a light source; an optical system for guiding light from the light source to an illumination region for the imager; and an optical element disposed in the optical system for changing a traveling direction of light traveling from the light source to the illumination region in accordance with a control signal. A region of the optical element through which the light from the light source passes, is divided into a plurality of regions in an in-plane direction of an incident plane of the light. The traveling direction of the light traveling to the illumination region is controlled for each of the divided regions in accordance with the control signal.

In the first aspect, the traveling direction of light is controlled such that part of a light amount to be applied to a region of low-brightness pixels on the imager is distributed to a region of high-brightness pixels. Under this control, high image quality by improvement of the contrast and high brightness by enhancement of the light use efficiency are realized at the same time.

A second aspect of the present invention relates to a projection image display apparatus. A projection image display apparatus according to this aspect comprises: an illuminating apparatus for applying light to an illumination area; an imager disposed in the illumination region; and a projection unit for projecting the light modulated by the imager onto a projection plane. The illuminating apparatus comprises: a light source; an optical system for guiding the light from the light source to an illumination region; and an optical element disposed in the optical system and changing a traveling direction of the light traveling from the light source to the illumination region in accordance with a control signal. A region of the optical element through which the light from the light source passes is divided into a plurality of regions in an in-plane direction of an incident plane of the light. The traveling direction of the light traveling to the illumination region is controlled for each of the divided regions in accordance with the control signal.

In the second aspect, as in the case with the first aspect, the traveling direction of light is controlled such that part of a light amount to be applied to a region of low-brightness pixels on the imager is distributed to a region of high-brightness pixels. Under this control, high image quality by improvement of the contrast and high brightness by enhancement of the light use efficiency are realized at the same time.

### BRIEF DESCRIPTION OF THE DRAWINGS

The above-mentioned and other objectives and novel features of the present invention will be more fully understood by reading the description of preferred embodiments below in combination with the attached drawings as follows:
FIG. 1 is a view of an optical system of a projector according to Embodiment 1;
FIGs. 2A and 2B are views illustrating functions of diffractive elements according to Embodiment 1;
FIGs. 3A and 3B are schematic views showing relationships between the diffractive elements and liquid crystal panels according to Embodiment 1;
FIG. 4 is a view showing a specific configuration example of the diffractive elements and liquid crystal panels according to Embodiment 1;
FIG. 5 is a view showing a circuit configuration of the projector according to Embodiment 1;
FIG. 6 is a view showing a process flow in a control signal arithmetic part according to Embodiment 1;
FIG. 7 is a view showing a direction of distribution of a light amount in the process flow of FIG. 6;
FIGs 8A to 8C are views showing examples of calculations by the process flow of FIG.6;
FIGs. 9A and 9B are views showing an optical system of a projector according to Embodiment 2;
FIG. 10 is a schematic view showing a relationship among a color filter, a diffractive element and a liquid crystal panel according to Embodiment 2; and
FIG. 11 is a view showing a configuration example of a three-plate LCD projector.

However, the drawings are merely intended for illustration and do not limit the scope of the present invention.

### DESCRIPTION OF PREFERRED EMBODIMENTS

Preferred embodiments of the present invention will be described with reference to the drawings.

### <Embodiment 1>

In the present embodiment, the present invention is applied to a three-panel LCD projector in which a laser light source is used as a light source.

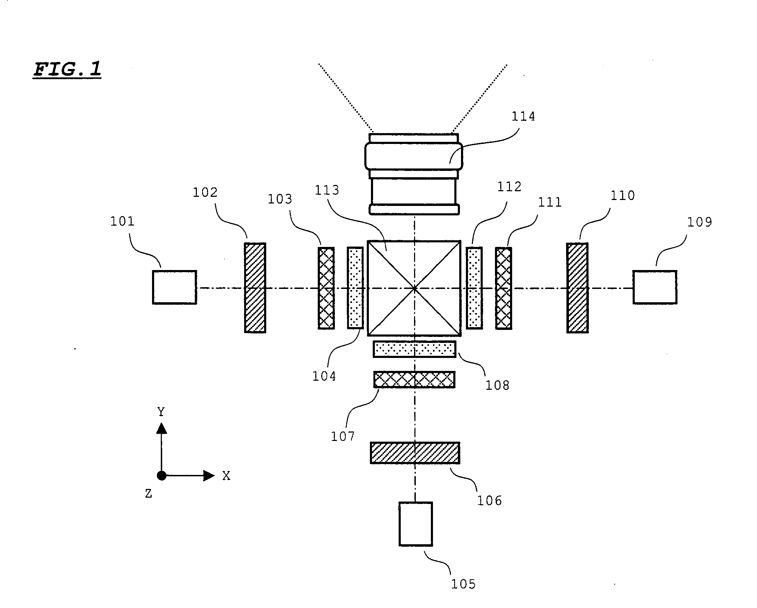

FIG. 1 illustrates an optical system of a projector according to the present embodiment.

In FIG. 1, laser light sources 101, 105 and 109 respectively emit R, G and B lights. Homogenizers 102, 106 and 110 respectively apply the R, G and B lights uniformly to illumination regions of liquid crystal panels 104, 1.08 and 112. The homogenizers 102, 106 and 110 are a small-sized integrator constituted by micro-lens array.

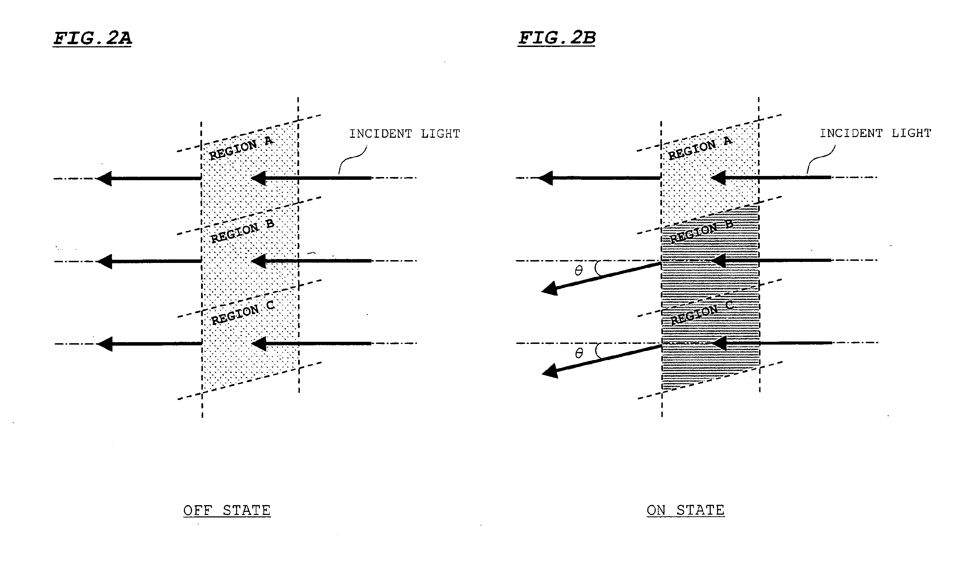

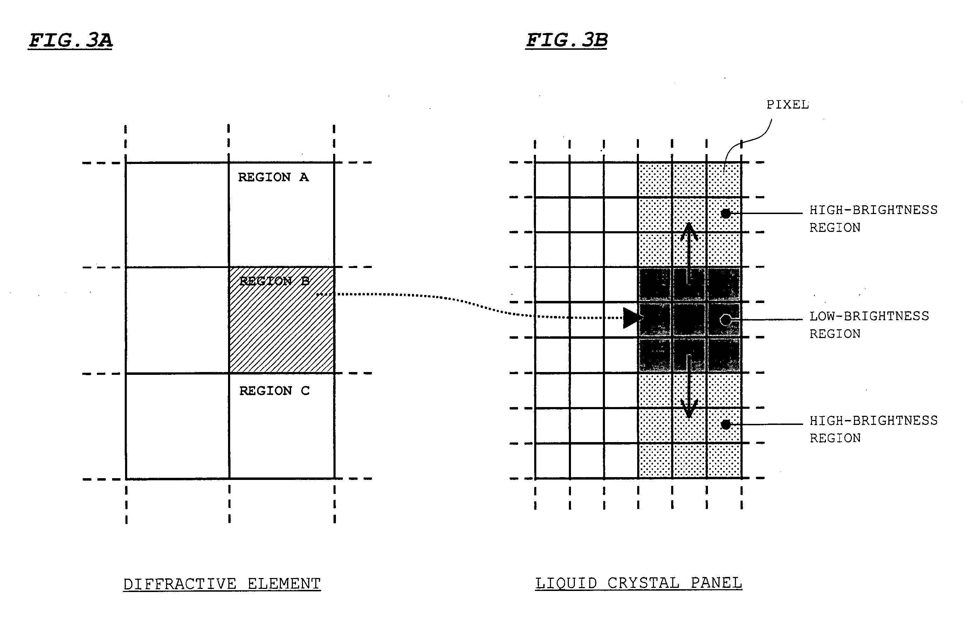

Diffractive elements 103, 107 and 111 respectively change traveling directions of the R, G and B lights entered from the homogenizers 104, 108 and 112 for each of the regions in accordance with a control signal. Functions of the diffractive elements 103, 107 and 111 will be described later with reference to FIGs. 2A, 2B, 3A and 3B.

The liquid crystal panels 104, 108 and 112 are respectively driven in accordance with drive signals for red, green and blue colors to modulate the R, G and B lights in accordance with their driven states. A dichroic prism 113 combines the R, G and B lights modulated by the liquid crystal panels 104, 108 and 112, and emits the combined light into a projection lens 114.

FIGs 2A and 2B illustrate functions of the diffractive elements 103, 107 and 111.

In the diffractive elements 103, 107 and 111, each of light transmitting regions for the R, G and B lights is divided into a plurality of regions in an in-plane direction. Each of the regions has a diffraction effect on laser light in a state where a voltage is applied.

FIG. 2A illustrates a traveling direction of the laser light when no voltage is applied to a region A, B or C. As shown in the drawing, when no voltage is applied to the area A, B or C, the laser light is not diffracted by the area A, B or C, passes through these areas and then travels in straight lines. In contrast to this, as shown in FIG. 2B, when a voltage is applied to the regions B and C, the laser light passes through the areas B and C under a diffractive effect, and is changed in a traveling direction at an angle of θ with respect to the incident direction.

The diffractive elements 103, 107 and 111 may have, for example, a constitution in which liquid crystal molecules are sealed in between a pair of glass plates via a transparent electrode plate. In this case, application of a voltage via a transparent electrode with a predetermined pattern forms a diffraction grating of the liquid crystal molecules in each of the regions. For example, Bragg diffractive elements developed by SBG Labs can be used as the diffractive elements 103, 107 and 111. This kind of diffractive elements are described in US6,175,431 (US Patent) and US2001/0013960Al (US Publication of Unexamined Patent Application), for example. In this case, one diffractive element acts on light in a specific wavelength band and can diffract the light at any angle.

FIGs. 3A and 3B illustrate relationships between the diffractive elements 103, 107 and 111 and the liquid crystal panels 104, 108 and 112.

Regions A, B and C in FIG. 3A correspond to the plurality of regions formed by division of the light transmitting region of the diffractive elements 103, 107 and 111 as described above (hereinafter, referred to as "diffractive regions"). The diffractive regions have a resolution lower than that of pixels on the liquid crystal panels 104, 108 and 112, as seen from comparison between FIGs. 3A and 3B. In a configuration example of FIGs. 3A and 3B, the diffractive regions are set in the diffractive elements 103, 107 and 111 such that each of the diffractive elements is in one-to-one correspondence with a pixel region formed of nine pixels, three pixels wide by three pixels high.

When no voltage is applied to a diffractive region, the light passing through the diffractive region travels straight and is applied to a pixel region corresponding to the diffractive region (hereinafter, referred to as "corresponding pixel region"). When a voltage is applied to a diffractive region, the light passing through the diffractive region is diffracted by the diffractive region and applied to a pixel region other than the corresponding pixel region.

For example, when no voltage is applied to the diffractive region B, the light passing through the diffractive region B is applied to the corresponding pixel region shown by a dotted-line arrow in FIGs. 3A and 3B. In contrast to this, when a voltage is applied to the diffractive region B, the light passing through the diffractive region B is applied to the pixel regions adjacent to the corresponding pixel region. In FIG. 3B, when a voltage is applied to the diffractive region B, the light passing through the diffractive region B is distributed to the pixel regions on top and bottom sides of the corresponding pixel region.

For example, when a brightness value in a pixel region corresponding to the diffractive region B (e.g., average brightness value of pixels existing in the corresponding pixel region) is lower than the brightness values in the adjacent pixel regions (e.g., pixel regions on the top and bottom sides of the corresponding pixel region), the diffractive region B is subjected to time-sharing ON/OFF control during a predetermined control period. As a result, a predetermined amount out of the overall amount of the light entered on the diffractive region B during the control period is distributed to the pixel regions adjacent to the corresponding pixel region (e.g., top- and bottom-side pixel regions). The amount of the light distributed to the top- and bottom-side pixel regions is an amount of light in accordance with a total length of a time during which application of the voltage to the diffractive region B is an ON state during the control period. That is, the amount distributed to the top- and bottom-side pixels is adjusted in accordance with the length of the ON period.

While the light is distributed to the pixel regions on the top and bottom sides of the corresponding pixel region in FIG. 3B, the light may be distributed to the pixel regions on the right and left sides of the corresponding pixel region, to either one of the top- and bottom-side pixel regions, or to either one of the right- and left-side pixel regions. Alternatively, the light may be distributed to four pixel regions on the right, left, top and bottom sides.

In distributing the light to one direction, for example, only one Bragg diffractive element described above may be used. In distributing the light to two directions, two diffractive elements may be layered so that the directions of diffraction are opposite to each other. In distributing the light to the four directions, four diffractive elements may be layered so that the directions of diffraction are different from each other by 90 degrees. In the case of a two-layered or four-layered structure, the traveling direction of the light can be changed in two or four directions by time-sharing controlling ON/OFF of the voltage applied to the diffractive elements (diffractive region) of each layer.

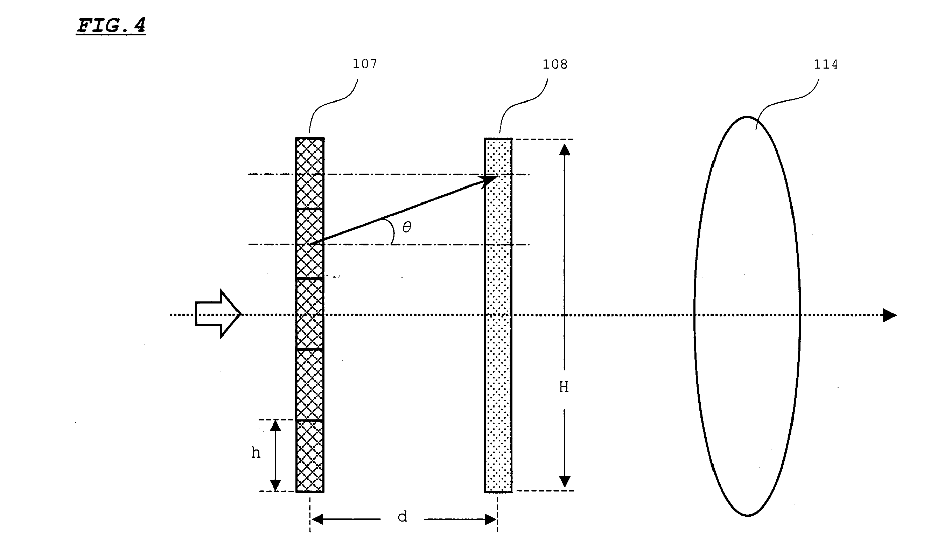

A specific configuration example of the diffractive element and liquid crystal panel will be described with reference to FIG. 4. Here, it is assumed that an angle of dispersion of the light entered on the diffractive element is 0 (parallel to a light axis). In the drawing, only the diffractive element 107 and liquid crystal panel 108 for the G light are shown for convenience of illustration, and the diffractive elements and liquid crystal panels for the R and B lights may also be configured in the same manner as described below.

FIG. 4 is a view of the liquid crystal panel 108 as seen from a direction perpendicular to a long side. A direction of diffraction of light by the diffractive element 107 is parallel to the long side of the liquid crystal panel 108 as shown by a bold arrow in the drawing.

A maximum angle of diffraction of the diffractive element 107 is determined by an F number of the projection lens 114. This is because, when the angle of diffraction is larger than the angle corresponding to the F number of the projection lens 114, the light is not taken into the projection lens, and thus, cannot be effectively used in image projection even though the light is distributed to the adjacent pixel region by diffraction as stated above.

For example, when the F number of the projection lens 114 is 3.0, an incident and projection angle of the projection lens is about 10 degrees. In this case, the diffraction angle θ of the diffractive element 107 shown in the drawing is set at θ=10 degrees. Assuming that a size of the liquid crystal panel 108 is 1 inch with an aspect ration of 4:3, a long side of an illumination region of the liquid crystal panel 108 is H≈20 mm. Meanwhile, assuming that a length of one side of the diffractive region is h and the diffractive element 107 is divided into five portions along a long side thereof and divided into four portions along a short side thereof, h=4 mm on the basis of H≈20 mm. Therefore, an interval between the diffractive element 107 and the liquid crystal panel 108 is d=h/tan*θ*≈23 mm. In the illumination region of the liquid crystal panel 108, 5x4=20 pixel regions are set in correspondence with the diffractive regions in the diffractive element 107. The light from the diffractive regions in the diffractive element 107 is distributed to the 20 pixel regions thus set.

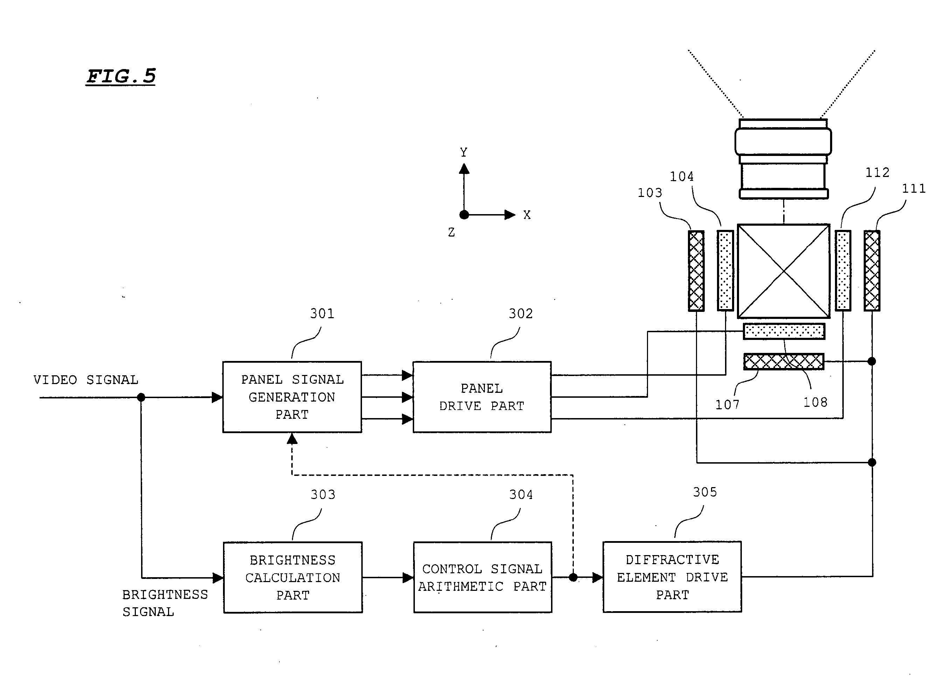

FIG. 5 is a circuit block diagram showing a circuit configuration of the projector according to the present embodiment. The drawing illustrates only the circuit configuration for driving and controlling the diffractive elements 103, 107 and 111 and the liquid crystal panels 104, 108 and 112, and other circuit configurations of a laser drive circuit and the like are omitted.

In the drawing, a panel signal generation part 301 generates a signal of each color for driving the respective liquid crystal panels 104, 108 and 112 on the basis of an input video signal, and supplies the generated drive signal of each color to a panel drive part 302. The panel drive part 302 drives the liquid crystal panels 104, 108 and 112 in accordance with the drive signal of each color supplied from the panel signal generation part 301.

A brightness calculation part 303 obtains brightness values of pixels from a brightness signal out of the input video signal, and for example, averages the brightness values for each of the pixel regions to calculate the brightness values of the pixel regions. A control signal arithmetic part 304 calculates a light amount ratio of the light to be applied to the pixel regions on the basis of the brightness values of the pixel regions determined by the brightness calculation part 303. Here, the control signal arithmetic part 304 calculates the light amount ratio such that a larger light amount is applied to a pixel region with a higher brightness value. Then, the control signal arithmetic part 304 supplies the diffractive element drive part 305 with a control signal that executes time-sharing ON/OFF control on the voltage applied to the diffractive regions of the diffractive elements 103, 107 and 111 to have the calculated light amount ratio.

As stated above, as the ON period of voltage application to each of the diffractive regions is longer, a larger amount of light passing through the diffractive region is distributed to the pixel regions around the corresponding pixel region. The control signal arithmetic part 304 adjusts the ON period of voltage application to the diffractive regions during time-sharing control such that the color lights are applied to the pixel regions in the light amount ratio calculated as stated above, and supplies a control signal for attaining this to the diffractive element drive part 305.

The diffractive element drive part 305 drives the diffractive regions of the diffractive elements 103, 107 and 111 in a time-sharing manner in accordance with the control signal supplied from the control signal arithmetic part 304. Specifically, the diffractive element drive part 305 switches voltage application to each of the diffractive regions between ON and OFF states in a time-sharing manner.

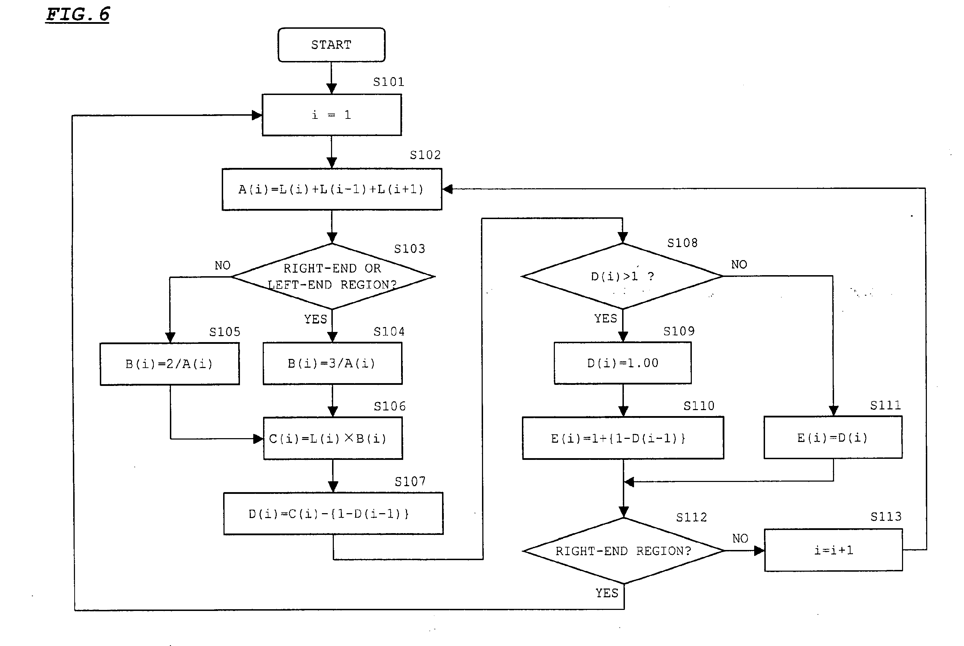

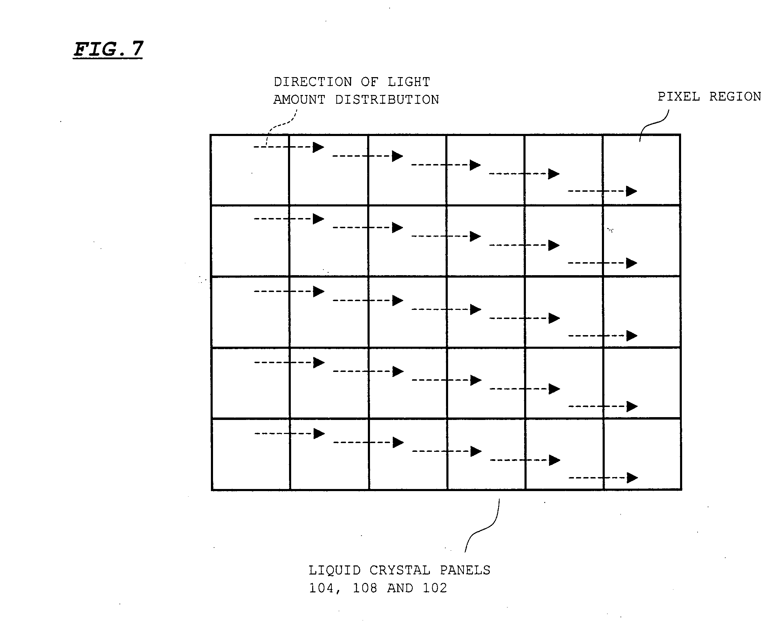

FIG. 6 illustrates an example of a process flow in calculating the light amount ratio (ratio of light amount to be applied to the pixel regions) in the control signal arithmetic part 304. Here, it is assumed that the R, G and B lights are distributed by the diffractive regions of the diffractive elements 103, 107 and 111 only to the adjacent pixel regions on the right sides of the target pixel region in a horizontal direction (long-side direction) as shown in FIG. 7.

Returning to FIG. 6, when the brightness value (e.g., average brightness value) of the pixel regions is calculated with respect to the input video signal in a certain timing, a variable i is set to 1 (S101) and a calculation process of the light amount ratio with respect to the pixel region in the top line shown in FIG. 7 is started. Here, the following process is sequentially carried out from the leftmost pixel region to the right-hand pixel regions in this line.

First, a brightness value L(i) of an i-th pixel region from the left (hereinafter, referred to as "pixel region (i)") and brightness values L(i-1) and L(i+1) of the pixel regions on both adjacent sides are summed to determine a value A(i) (S102).

When the pixel region (i) is positioned at the left end of the line, only the brightness values of the pixel region (i) and pixel region on the right side of the pixel region (i) are summed. When the pixel region (i) is positioned at the right end of the line, only the brightness values of the pixel region (i) and pixel region on the left side of the pixel region (i) are summed.

Next, it is determined whether the pixel region (i) is positioned on the right or left end of the line (S103). When the determination result of S103 is NO, an improvement coefficient B(i) is calculated by an arithmetic operation of B(i)=3/A(i) (S104). When the determination result of S103 is YES, the improvement coefficient B(i) is calculated by an arithmetic operation of B=2/A(i) (S105). Further, on the basis of the calculated improvement coefficient B(i) and the brightness value L(i) of the pixel region (i), an improvement brightness C(i) is calculated by an arithmetic operation of C(i)=L(i)×B(i) (S106).

When the improvement brightness C(i) has been calculated as stated above, a division coefficient D(i) for the pixel region (i) is determined on the basis of the improvement brightness C(i) and a division coefficient D(i-1) already determined for the pixel region on the left of the pixel region (i) by an arithmetic operation of D(i)=C(i)-{1-D(i-1)} (S107).

Then, it is determined whether the calculated division coefficient D(i) exceeds 1 or not (S108). When the calculated division coefficient D(i) exceeds 1 (S108: YES), the distribution ratio D(i) is corrected to be D(i)=1 (S109). Thereafter, with use of the division coefficient D(i-1) already calculated for the adjacent pixel region on the left of the pixel area (i) , a correction brightness value E (i) for the pixel region (i) is determined by an arithmetic operation of E(i)=1+{1-D(i-1)} (S110). On the other hand, when the determination result of S108 is NO, with use of the division coefficient D(i) already calculated at S107, the correction brightness value E(i) for the pixel region (i) is set by E(i)=D(i) (S111).

When the correction brightness E (i) for the pixel region (i) has been calculated as described above, then, it is determined whether or not the pixel region (i) is positioned at the right end of the top line (S113). When the determination result is NO, 1 is added to the variable i and the process of S102 and later is carried out on a pixel region shifted by one to the right. The process of S102 and later is repeated on up to the pixel region at the right end of the top line. When the process has been finished on the pixel region at the right end of the top line (S112: YES), the variable i is reset to 1 at S101 and the process of S102 and later is carried out on pixel regions in a next line below. The process is repeated on up to a pixel region at the right end of the bottom line to complete acquisition of the correction brightnesses E(i) for one screenful of pixel regions.

A representation' of the thus acquired correction brightness E (i) on a ratio scale is the above-mentioned light amount ratio. More specifically, the control signal arithmetic part 304 executes time-sharing ON/OFF control on voltage application to the diffractive regions of the diffractive elements 103, 107 and 111 such that the total amount of the light entered into each pixel region is the light amount in accordance with the ratio of the correction brightness E (i) .

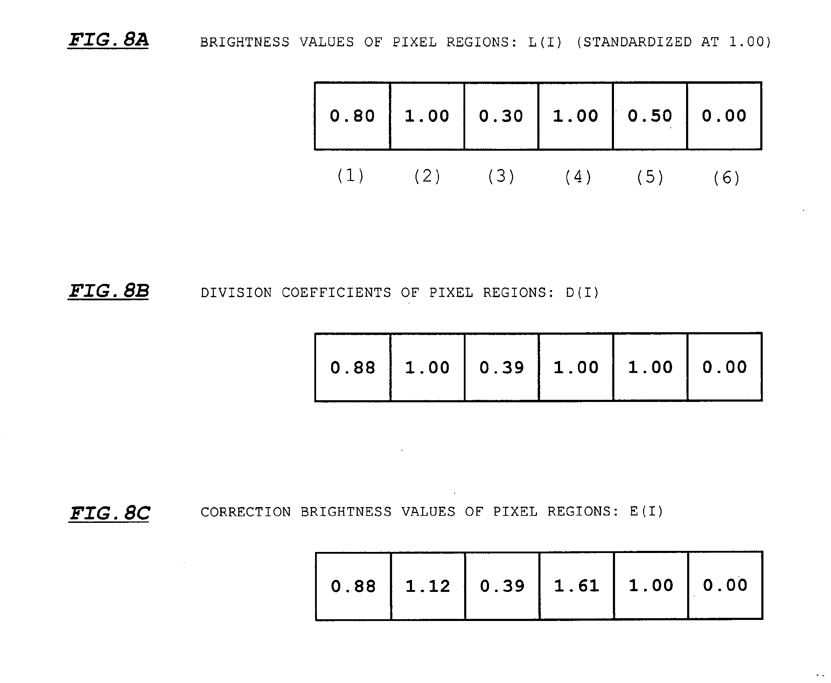

FIGs. 8A, 8B and 8C show an example of calculation of the correction brightness E(i) by the process flow shown in FIG. 6. In the drawings, six pixel regions (pixel regions 1, 2, ... , 6 from the left) are horizontally arranged for convenience of illustration. In addition, the pixel regions are shown in only one line. In FIG. 8A, the brightness value (e. g., average brightness value) of the pixel regions calculated from the input video signal (brightness signal) is standardized at 1.00. FIGs. 8B and 8C respectively show the division coefficient D(i) and correction brightness value E(i) calculated for each of the pixel regions.

Parameter values A(i) to E(i) calculated by the process flow shown in FIG. 6 are as follows:
Pixel region 1 (left end):
   A(1)=1.80, B(1)=1.11, C(1)=0.88
   D(1)=0.88, E(1)=0.88
Pixel region 2:
   A(2)=2.10, B(2)=1.42, C(1)=1.42
   D(2)=1.00, E(2)=1.12
Pixel region 3:
   A(3)=2.30, B(3)=1.30, C(3)=0.39
   D(3)=0.39, E(3)=0.39
Pixel region 4:
   A(4)=1.80, B(4)=1.66, C(4)=1.66
   D(4)=1.00, E(4)=1.61
Pixel region 5:
   A(5)=1.50, B(5)=2.00, C(5)=1.00
   D(5)=1.00, E(5)=1.00
Pixel region 6 (right end):
   A(6)=0.50, B(6)=1.00, C(6)=0.00
   D(6)=0.00, E(6)=0.00

In the calculation example of FIGs. 8A, 8B and 8C, no voltage is applied to the diffractive regions corresponding to the pixel regions with the division coefficient D(i) of 1 shown in FIG. 8B, and the lights of each color travel straight. In addition, the voltage is applied in a time-sharing manner to the diffractive regions with the division coefficient D(i) of less than 1 such that the light amount of {1-D(i)}×100(%) out of the applied light amount is diffracted. For example, the voltage is applied in a time-sharing manner to the diffractive region corresponding to the pixel region 1 such that 12% of all the light amount passing through the diffractive region during a unit period is diffracted and distributed to the pixel region 2. Accordingly, the light amount applied to the pixel region 1 during the unit period is decreased by 12% and the light amount applied to the pixel region 2 is increased by 12%.

As mentioned above, according to the present embodiment, the amount of the light applied to the pixel region is adjusted in accordance with the brightness value of the pixel region. Therefore, it is possible to prevent decrease in the light use efficiency and contrast due to application of the light to low-brightness pixel regions.

In the above-mentioned embodiment, the light amount ratio of the light to be applied to the pixel regions is calculated by use of the brightness signal out of the video signal. Alternatively, the light amount ratio may be calculated on the basis of the color signal. In this case, the diffractive elements 103, 107 and 111 are individually controlled in accordance with the light amount ratio calculated on the basis of the color signal.

Further, in the above-mentioned embodiment, the resolution of the diffractive region is lower than the resolution of the pixel on the liquid crystal panel. Alternatively, the resolution of the diffractive region may be equal to or higher than the resolution of the pixel. When the resolution of the diffractive region is higher than the resolution of the pixel, the direction of distribution of the light may be changed for each diffractive region. For example, when four diffractive regions are associated with one pixel, the destination of distribution of the light by the four diffractive regions may be four adjacent pixels on the right, left, top and bottom sides of the corresponding pixel.

When the average brightness in the pixel region is small but a brightness of a certain pixel in the pixel region is high at its peak, if the light applied to the pixel region is distributed to other pixel regions, image quality may even be degraded. In such a case, therefore, the amount of the light applied to the pixel region may not be distributed to other areas and a normal light amount of light may be applied to the pixel region.

In the above-mentioned embodiment, switching takes place between diffraction and straight-traveling of light by ON/OFF control of the voltage. In using a diffractive element of a type that adjusts the light amount ratio of the straight-traveling light to the diffracted light by a magnitude of the applied voltage, distribution of the light amount to the pixel regions may be controlled by adjusting the value of the voltage applied to the diffractive regions, instead of using time-sharing control on the applied voltage in the above-mentioned embodiment.

Moreover, in accordance with the ratio of the light amount distribution to the pixel regions, a drive signal for liquid crystal panels may be further adjusted. More specifically, as indicated by a dashed line in FIG. 5, the light amount ratio between the pixel regions calculated by the control signal arithmetic part 304 may be fed back to the panel signal generation part 301 to adjust the drive signal for the liquid crystal panels 104, 108 and 112 so as to be suited to the light amount ratio.

In addition, as shown in FIG. 11, a relay optional system and a color separator means may be used to apply the light to the liquid crystal panels of each color. However, since a diffractive element performs a diffractive function more efficiently on highly directional light in a narrow wavelength band, it is desired that a light source be replaced with a white laser light source or a combination of laser light sources emitting the R, G and B lights.

### <Embodiment 2>

In the present embodiment, the present invention is applied to a single-plate projector.

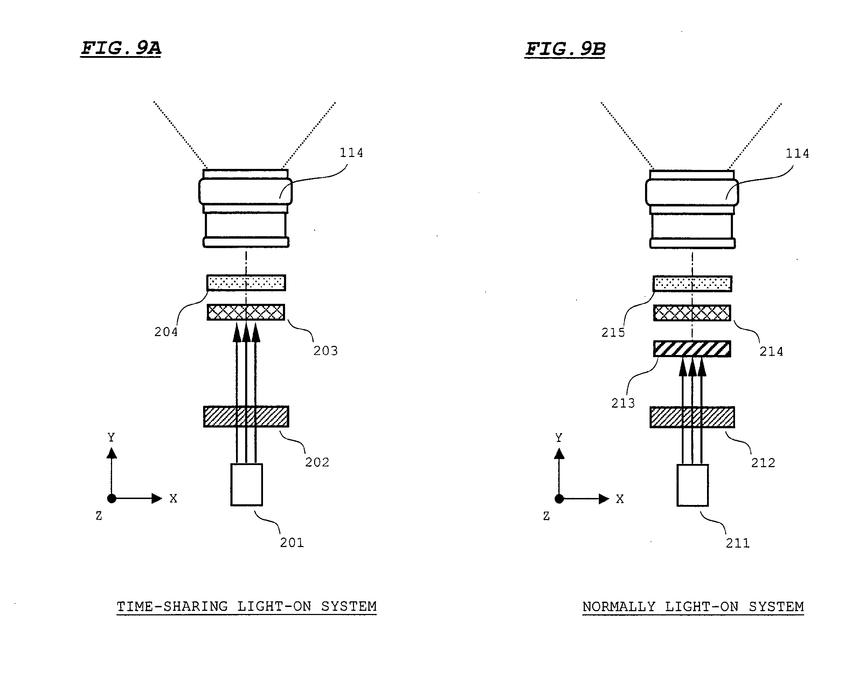

FIGs. 9A and 9B illustrate an optical system according to the present embodiment. FIG. 9A shows a configuration example of the optical system from which the R, G and B lights are emitted in a time-sharing manner, and FIG. 9B shows a configuration example of the optical system from which white laser light or the R, G and B lights are emitted at all times.

With reference to FIG. 9A, a laser light source 201 emits the R, G and B lights in a time-sharing manner in accordance with a drive signal from a laser drive circuit. The emitted R, G and B lights are adjusted by a homogenizer 202 so as to be evenly applied to a liquid crystal panel 204. The liquid crystal panel 204 is a type for a monochrome display.

A diffractive element 203 has a plurality of diffractive regions arranged in an in-plane direction, as in Embodiment 1. Through ON/OFF control of the voltage applied to the diffractive regions, an action on the incident laser light is switched between straight-traveling and diffraction. Here, the diffractive element 203 has, for example, a structure in which diffractive elements for the R, G and B lights are layered. During a period when the R light is emitted from the laser light source 201, the diffractive element for the R light is under ON/OFF control. During a period when the G or B light is emitted from the laser light source 201, the diffractive element for the G or B light is under ON/OFF control.

In the present embodiment, as in Embodiment 1, the amount of the light applied to the pixel regions can be adjusted in accordance with the brightness value of the pixel regions to prevent decrease in the light use efficiency and contrast. In this case, control of the diffractive elements of each color light may be carried out in the same manner as in Embodiment 1. Specifically, the drive signal from the diffractive element drive part 305 in FIG. 5 may be supplied to the diffractive elements for the color lights on the diffractive element 204. During a period when the R, G and B lights are emitted, modulation patterns for the R, G and B lights are drawn on the liquid crystal panel 204.

In the present embodiment, the R, G and B lights are emitted in a time-sharing manner. Alternatively, the white laser light (hereinafter, referred to as "W light") may be emitted from a white laser light source at all times and be passed through a color wheel so that the R, G and B lights are generated in a time-sharing manner.

In a normally light-on optical system shown in FIG. 9B, the W light is emitted at all times from a laser light source 211. Alternatively, the R, G and B lights may be emitted at all times from the laser light source 211 and combined by a combining means.

The emitted W light is adjusted by a homogenizer 212 so as to be evenly applied to a liquid crystal panel 215. In the present embodiment, the liquid crystal panel 215 is also a type for a monochrome display. The W light passing through the homogenizer 212 is separated by a hologram color filter 213 into the R, G and B lights and entered into the liquid crystal panel 215 via a diffractive element 214.

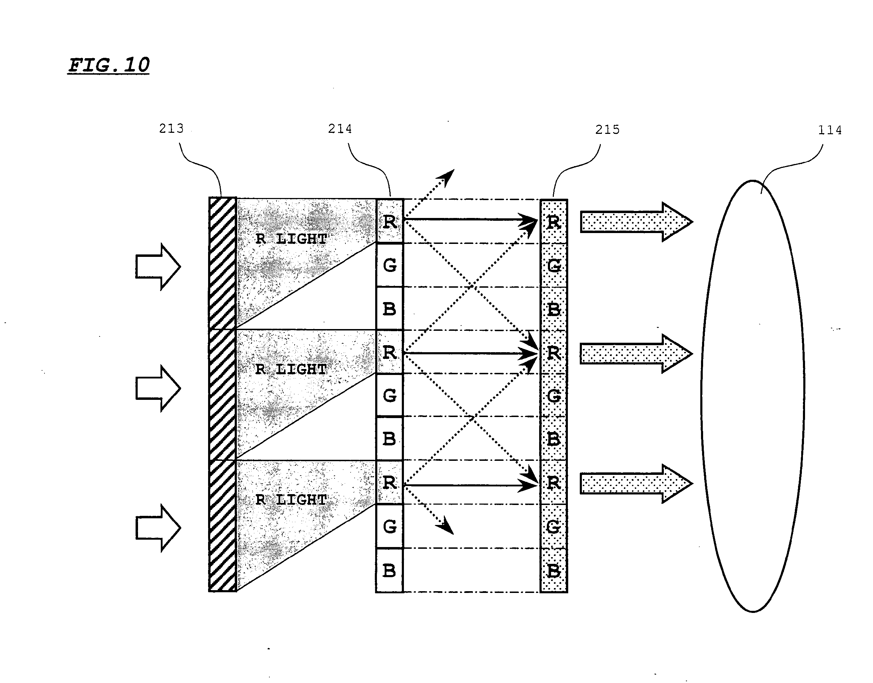

FIG. 10 shows a schematic view of a relationship among the hologram color filter 213, the diffractive element 214 and the liquid crystal panel 215. In the drawing, only a light path of the R light is schematically illustrated for convenience of illustration.

As in Embodiment 1, the diffractive element 214 has a plurality of diffractive regions arranged in an in-plane direction. In a configuration example of the drawing, resolutions of the diffractive regions are set to be identical to those of pixels on the liquid crystal panel 215. The pixels on the liquid crystal panel 215 are divided into three segments for the R, G and B lights, and therefore, the diffractive regions corresponding to the pixels are divided into three segments for the R, G and B lights. The hologram color filter 213 separates the incident W light by color' and respectively guides the resulting R, G and B lights to the diffractive regions for the R, G and B lights on the diffractive element 214.

Here, as in Embodiment 1, the diffractive regions diffract the color lights when voltage application is in the ON state, and the color lights travel straight when voltage application is in the OFF state. As in Embodiment 1, the diffractive regions may have one direction of diffraction, two opposite directions of diffraction, or four mutually perpendicular directions of diffraction.

A diffraction angle of the light in the diffractive regions is set such that the light is distributed to the pixels to which the light of the same color as that of the corresponding pixel is entered. More specifically, in the embodiment of the drawing, when a voltage is applied to the diffractive region to which the R light is entered, the R light bypasses a pixel for the G light adjacent to the corresponding pixel and a pixel for the B light next to the pixel for G light, and is entered into a next pixel for the R light. The diffraction angles in the diffractive regions for the G and B lights are set in the same manner.

In the present embodiment, as in Embodiment 1, the amount of the light applied to the pixel region may be adjusted in accordance with the brightness value of the pixel region to prevent decrease in the light use efficiency and contrast. In this case, control on the diffractive elements for the color lights in the embodiment 1 can be used as it is on the diffractive regions for the color lights in the diffractive element 214. More specifically, the drive signal from the diffractive element drive part 305 in FIG. 5 can be supplied to the diffractive regions for the color lights in the diffractive element 214. The modulation patterns for the R, G and B lights are drawn in the pixels for the R, G and B lights on the liquid crystal panel 215.

While the resolutions of the diffractive regions are set to be the same as those of the pixels on the liquid crystal panels in the present embodiment, the resolutions of the diffractive regions may be set higher than those of the pixels. In addition, as in Embodiment 1, the drive signal of the liquid crystal panels may be adjusted in accordance with the ratio of the light amount distribution to the pixels.

The embodiments in the present invention have been described above. The present invention is not limited to the above-mentioned embodiments.

## Claims

1. An illuminating apparatus for applying light to an imager that modulates the light in accordance with a video signal, comprising:
a light source;
an optical system for guiding the light from the light source to an illumination region for the imager; and
an optical element disposed in the optical system for changing a traveling direction of the light traveling from the light source to the illumination region in accordance with a control signal, wherein
a region of the optical element through which the light from the light source passes, is divided into a plurality of regions in an in-plane direction of an incident plane of the light, and the traveling direction of the light traveling to the illumination region is controlled for each of the divided regions in accordance with the control signal.

2. The illuminating apparatus according to Claim 1, wherein
each of the divided regions of the optical element is set in correspondence with a pixel region formed by one or more pixels of the imager.

3. The illuminating apparatus according to Claim 2, wherein
the divided regions of the optical element are sized so as to have a resolution lower than that of the pixels on the imager.

4. The illuminating apparatus according to Claim 2, further comprising:
a control circuit for controlling the optical element; and
a calculation circuit for calculating a ratio of a light amount to be distributed to the pixel regions on the basis of the video signal, wherein
the control circuit drives and controls the optical element such that the light is distributed to the pixel regions in the ratio of the light amount calculated by the calculation circuit.

5. The illuminating apparatus according to Claim 4, wherein
the calculation circuit calculates a brightness balance among the pixel regions on the basis of the video signal and also calculates the ratio of the light amount on the basis of the calculated brightness balance.

6. A projection image display apparatus, comprising:
an illuminating apparatus for applying light to an illumination region;
an imager disposed in the illumination region; and
a projection unit for projecting the light modulated by the imager onto a projection plane;
the illuminating apparatus comprising:
a light source;
an optical system for guiding the light from the light source to the illumination region; and
an optical element disposed in the optical system and changing a traveling direction of the light traveling from the light source to the illumination region in accordance with a control signal, wherein
a region of the optical element through which the light from the light source passes is divided into a plurality of regions in an in-plane direction of an incident plane of the light, and the traveling direction of the light traveling to the illumination region is controlled for each of the divided regions in accordance with the control signal.

7. The projection image display apparatus according to Claim 6, wherein
each of the divided regions of the optical element is set in correspondence with a pixel region formed by one or more pixels of the imager.

8. The projection image display apparatus according to Claim 7, wherein
the divided regions of the optical element are sized so as to have a resolution lower than that of the pixels on the imager.

9. The projection image display apparatus according to Claim 7, further comprising:
a control circuit for controlling the optical element; and
a calculation circuit for calculating a ratio of a light amount to be distributed to the pixel regions on the basis of a video signal, wherein
the control circuit drives and controls the optical element such that the light is distributed to the pixel regions in the ratio of the light amount calculated by the calculation circuit.

10. The projection image display apparatus according to Claim 9, wherein
the calculation circuit calculates a brightness balance among the pixel regions on the basis of the video signal and also calculates the ratio of the light amount on the basis of the calculated brightness balance.
